(19) **Europäisches Patentamt European Patent Office Office européen des brevets**

(11) **EP 1 073 515 B1**

(12) **FASCICULE DE BREVET EUROPEEN**

(45) Date de publication et mention de la délivrance du brevet:
**13.06.2007 Bulletin 2007/24**

(21) Numéro de dépôt: **99914597.2**

(22) Date de dépôt: **16.04.1999**

(51) Int Cl.:
*B01J 19/32* (2006.01)    *F25J 3/04* (2006.01)
*F25J 3/02* (2006.01)

(86) Numéro de dépôt international:
**PCT/FR1999/000897**

(87) Numéro de publication internationale:
**WO 1999/054036 (28.10.1999 Gazette 1999/43)**

(54) **STRUCTURE MARITIME FLOTTANTE PERFECTIONNEE AVEC COLONNE DE DISTILLATION**

SCHWIMMENDE SEESTRUKTUR MIT DESTILLATIONSÄULE

IMPROVED FLOATING MARINE STRUCTURE WITH DISTILLATION COLUMN

(84) Etats contractants désignés:
**DE DK FR GB NL SE**

(30) Priorité: **17.04.1998 FR 9804835**

(43) Date de publication de la demande:
**07.02.2001 Bulletin 2001/06**

(73) Titulaire: **L'AIR LIQUIDE, Société Anonyme pour l'Etude et l'Exploitation des Procédés Georges Claude 75321 Paris Cedex 07 (FR)**

(72) Inventeurs:
• **FRAYSSE, Philippe**
**F-92260 Fontenay aux Roses (FR)**
• **WERLEN, Etienne**
**F-78000 Versailles (FR)**

(74) Mandataire: **Conan, Philippe Claude et al L'Air Liquide SA, 75 Quai d'Orsay 75321 Paris Cedex 07 (FR)**

(56) Documents cités:
**WO-A-84/04048**          **DE-A- 2 739 627**
**US-A- 4 929 399**        **US-A- 5 644 932**

• **HOTING B ET AL: "UNTERSUCHUNGEN ZUR FLUIDDYNAMIK UND STOFFUERBERTRAGUNG IN EXTRAKTIONS-KOLONNEN MIT STRUKTURIERTEN PACKUNGEN TEIL I: FLUIDDYNAMISCHES VERHALTEN IN ABHAENGIGKEIT VON ENERGIEEINTRAG UND PHASENVERHAELTNIS" CHEMIE. INGENIEUR. TECHNIK, vol. 68, no. 1/02, 1 février 1996 (1996-02-01), pages 105-109, XP000555667**
• **PATENT ABSTRACTS OF JAPAN vol. 3, no. 97 (M-069), 17 août 1979 (1979-08-17) -& JP 54 072884 A (MITSUI ENG. & SHIPBUID. CO. LTD.), 11 juin 1979 (1979-06-11)**
• **PATENT ABSTRACTS OF JAPAN vol. 5, no. 35 (C-046), 5 mars 1981 (1981-03-05) -& JP 55 162337 A (MITSUI ENG. & SHIPBUILD. CO. LTD.), 17 décembre 1980 (1980-12-17) -& DATABASE WPI Section Ch, Week 8108 Derwent Publications Ltd., London, GB; Class H01, AN 81-12864d XP002089564 & JP 55 162337 A (MITSUI ENG. & SHIPBUILDING CO.), 17 décembre 1980 (1980-12-17)**

Remarques:
Le dossier contient des informations techniques présentées postérieurement au dépôt de la demande et ne figurant pas dans le présent fascicule.

**Description**

La présente invention est relative à une structure maritime flottante telle qu'une barge ou une plate-forme pétrolière en mer, possédant un angle d'oscillation i supérieure à 0° et au plus égal à une valeur prédéterminée $i_o$ qui est généralement comprise entre 5° et 10° environ.

Comme il est bien connu, les garnissages ondulés-croisés sont utilisés dans certaines colonnes de distillation à la place des plateaux de distillation pour assurer l'échange de matière et de chaleur entre un gaz montant et un liquide descendant. Ces garnissages ondulés-croisés sont constitués par une superposition de tronçons. Chaque tronçon est formé d'un empilement de bandes ondulées disposées chacune dans un plan général vertical et les unes contre les autres. Les ondulations sont obliques et descendent dans des sens opposés d'une bande à la suivante.

Les bandes comportent généralement une perforation dense de petit diamètre, avec un taux de perforation d'environ 10%, pour permettre au liquide de transiter de part et d'autre des bandes ondulées.

Le GB-A-1 004 046 et le CA-A-1 095 827 décrivent de tels garnissages ondulés-croisés.

Un garnissage ondulé-croisé est généralement fabriqué à partir d'un produit plat, à savoir de feuilles métalliques sous forme de bandes. Les bandes sont d'abord pliées (ou cintrées) de façon à former une tôle ondulée en bande dont les ondulations sont obliques par rapport à l'axe de la bande. Les bandes pliées sont ensuite découpées en tronçons, puis empilées en retournant alternativement une bande sur deux. Les tronçons de garnissage ainsi obtenus sont souvent appelés "packs".

Le WO-A-90/10 497 décrit, entre autres, un garnissage analogue aux garnissages ondulés-croisés précités, mais perforé de manière différente. Le terme "garnissage ondulé-croisé" utilisé ici comprend également un tel garnissage, ainsi que tout garnissage analogue.

Les plates-formes pétrolières en mer produisent des gaz résiduaires. Pour des raisons économiques et environnementales, il devient de plus en plus nécessaire de valoriser ces gaz. Une méthode consiste en leur conversion en hydrocarbures plus lourds , sous forme liquide et donc plus facilement transportable, par le procédé Fischer-Tropsch, lequel consomme de grandes quantités d'oxygène.

Il serait donc souhaitable de pouvoir embarquer une colonne de distillation à garnissage ondulé-croisé sur une telle structure flottante, mais ceci se heurte à de sérieuses difficultés.

En effet, dans les garnissages ondulés-croisés, les packs successifs sont tournés d'un certain angle, généralement de 90°, autour de l'axe de la colonne, d'un pack au suivant, afin de favoriser la redistribution périodique du liquide sur toute la section de la colonne.

Par suite, à chaque instant, les bandes ondulées de certains packs au moins forment un angle inférieur à 45° avec le plan d'inclinaison. Pour ces bandes, l'inclinaison i possède donc une composante substantielle dans leur plan général, laquelle tend à provoquer une déviation du liquide descendant. Du liquide a ainsi tendance à atteindre la virole de la colonne, puis à ruisseler sur celle-ci sans participer à la distillation. Les performances de distillation de la colonne sont par suite dégradées.

Le problème de base que l'invention se propose de résoudre consiste à réaliser une structure maritime flottante qui porte une colonne de distillation à garnissage ondulé-croisé capable de fonctionner dans des conditions satisfaisantes en présence des oscillations dues à la houle et dont l'amplitude est typiquement comprise entre 5° et 10°, éventuellement avec une direction d'oscillation préférentielle due aux vents dominants. Un impératif est ainsi que le liquide distribué en tête de colonne assure un mouillage sensiblement uniforme du garnissage sur toute la section de la colonne malgré les oscillations précitées.

A cet effet, l'invention a pour objet une structure selon la revendication 1.

La structure maritime flottante ainsi définie peut comporter une ou plusieurs des caractéristiques suivantes, prises isolément ou suivant toutes leurs combinaisons techniquement possibles :

- $\gamma$ = 40° environ et $\delta$ est compris entre 30° environ et 60° environ, de préférence entre 40° environ et 60° environ;
- $\gamma$ = 50° environ et $\delta$ est compris entre 40° environ et 60° environ, de préférence entre 50° environ et 60° environ;
- $\gamma$ = 60° environ et $\delta$ est compris entre 40° environ et 60° environ, de préférence entre 50° environ et 60° environ;
- $\gamma$ = 70° environ et $\delta$ est compris entre 50° environ et 60° environ et de préférence voisin de 60°;
- $\gamma$ = 80° environ et $\delta$ = 60° environ;
- la colonne est une double colonne de distillation d'air.

Des exemples de réalisation de l'invention vont maintenant être décrits en regard des dessins annexés, sur lesquels :

- la Figure 1 représente schématiquement, partiellement en coupe axiale, une structure maritime flottante suivant l'invention;
- les Figures 2 et 3 sont des vues prises en coupe, respectivement, suivant les lignes II-II et III-III de la Figure 1;

- la Figure 4 représente en perspective une partie d'un tronçon de garnissage ondulé-croisé;
- la Figure 5 représente une bande ondulée du garnissage, en vue de face;
- la Figure 6 représente la forme de l'ondulation des bandes du garnissage ondulé-croisé, en coupe suivant la ligne VI-VI de la Figure 5;
- la Figure 7 illustre l'écoulement d'un liquide cryogénique sur la bande ondulée, celle-ci étant en position non inclinée; et
- la Figure 8 illustre l'écoulement du liquide lorsque la bande ondulée est inclinée dans son plan général.

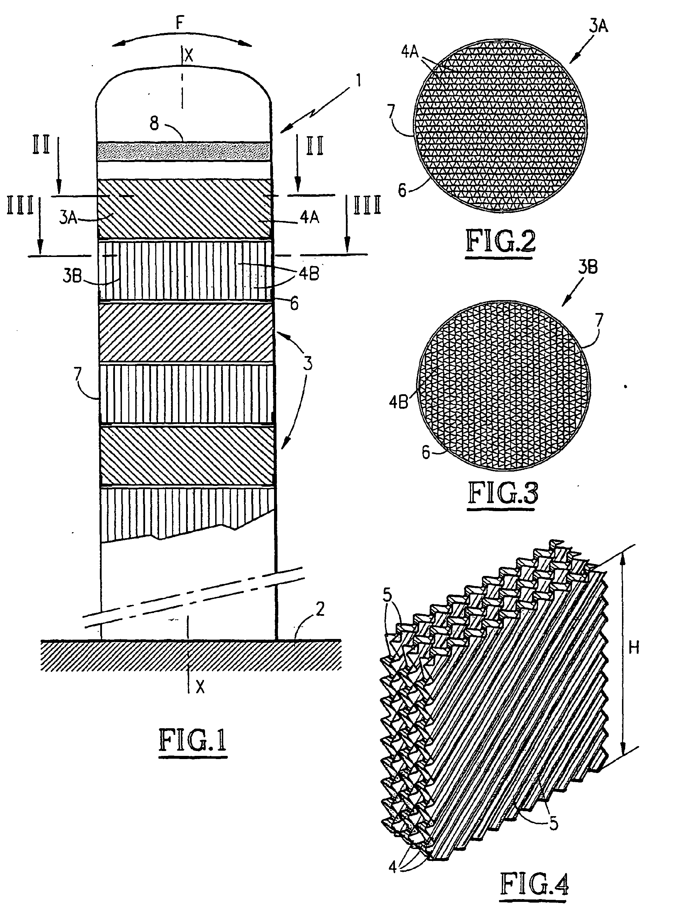

La Figure 1 représente schématiquement une colonne de distillation d'air 1 fixée à une barge ou à une plate-forme pétrolière 2 ancrée au fond de la mer. Cette barge, sous l'effet de la houle, oscille avec une direction d'oscillation instantanée, illustrée par la double flèche F et contenue dans le plan de la Figure. L'angle $i$ d'inclinaison sur la verticale de l'axe X-X de la colonne peut atteindre une valeur maximale prédéterminée $i_0$ au moins égale à 5°, et typiquement comprise entre 5 et 10° environ. Dans cette plage d'oscillation, la colonne doit assurer une distillation satisfaisante.

Les Figures 1 à 4 illustrent schématiquement l'agencement intérieur de la partie supérieure de la colonne 1. Cette partie supérieure comporte une superposition de packs ou tronçons 3 de garnissage ondulé-croisé, dont chacun a la forme d'une galette cylindrique occupant toute la section de la colonne.

Chaque pack 3 (Figures 2 à 4) est constitué d'un empilement de bandes ondulées 4 à ondes 5 obliques, ces bandes étant éventuellement perforées sur toute leur surface. Chaque bande 4 comporte un plan général vertical, toutes les bandes ont la même hauteur H, et les ondes sont alternativement inclinées dans un sens et dans l'autre d'une bande à la suivante. Ainsi, les ondes des bandes adjacentes se touchent en un grand nombre de points d'intersection.

Il est prévu deux types de packs 3 : des packs 3A (Figure 2) dont les bandes 4A sont supposées orientées parallèlement à la direction préférentielle d'oscillation F, c'est-à-dire au plan de la Figure 1, et des packs 3B (Figure 3) dont les bandes 4B sont orientées perpendiculairement aux bandes 4A. Chaque pack est supporté par exemple par un profilé périphérique 6 soudé à la virole 7 de la colonne.

Tous les packs 3 ont le même nombre de bandes 4, et les packs 3B sont alternés avec les packs 3A, comme représenté sur la Figure 1. Bien entendu, cet agencement peut se répéter tout le long de la colonne de distillation, c'est-à-dire de la colonne basse pression et de la colonne moyenne pression lorsqu'il s'agit, comme dans cet exemple, d'une double colonne de distillation d'air.

En service, le liquide qui descend dans la colonne, distribué en tête de colonne sur toute la section de celle-ci par un distributeur 8, s'écoule à travers les packs successifs. Les profilés 6 et l'orientation alternée des packs 3A et 3B assurent à intervalles réguliers la redistribution du liquide sur toute la section de la colonne.

Lorsque l'axe de la colonne s'incline d'un angle $i$, la distribution du liquide dans les packs 3B n'est pratiquement pas affectée, car les bandes 4B, étant perpendiculaires à la direction F, s'opposent efficacement à la déviation du liquide dans le sens de l'inclinaison.

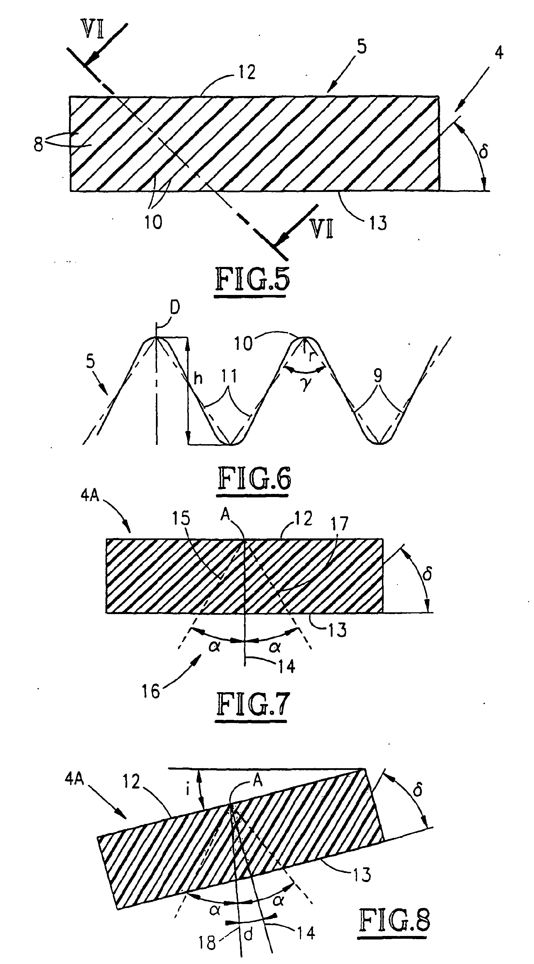

En revanche, dans les packs 3A, l'inclinaison $i$, qui se trouve dans le plan des bandes 4A, tend à dévier le liquide vers un bord vertical de ces dernières, et donc à détruire l'uniformité de la distribution du liquide dans ces packs, au détriment des performances de distillation. Ce phénomène va maintenant être détaillé en regard des Figures 5 à 8.

En coupe transversale (Figure 6), chaque onde 5 a une forme générale triangulaire, avec des flancs rectilignes 9 symétriques par rapport a la direction verticale D et des arrondis 10 aux sommets d'ondes. On a représenté en trait mixte les flancs d'onde moyens 11 obtenus en joignant les sommets d'onde successifs. L'onde est définie par sa hauteur totale $h$, mesurée parallèlement à la direction D, par l'angle $\gamma$ d'ouverture aux sommets des flancs moyens 11, et par le rayon $r$ des arrondis 10.

En vue de face (Figure 5), chaque bande 4 est un rectangle dont les ondes 5 sont inclinées d'un angle $\delta$ par rapport à l'horizontale, c'est-à-dire par rapport aux bords supérieur 12 et inférieur 13 de la bande.

On réalise les bandes 4 en pliant une tôle plane de départ, éventuellement perforée, suivant l'angle $\delta$, par pliage et/ou emboutissage sur un outil approprié.

Dans l'exemple des Figures 5 et 6, qui est repris au Figures 7 et 8, on a $\gamma = 60°$ et $\delta = 45°$.

Lorsque l'axe X-X de la colonne 1 est vertical ($i = 0$), les bords 12 et 13 des bandes 4A sont horizontaux, comme représenté sur la Figure 7. Le liquide arrivant en un point A quelconque du bord supérieur 12 d'une paire de bandes donnée s'écoule sur les deux faces des bandes à l'intérieur d'un demi-cône aplati délimite d'un côté par la perpendiculaire 14 au point A aux bords 12 et 13, et de l'autre côté par la ligne de plus grande pente moyenne 15 de la bande.

Par "ligne de plus grande pente moyenne", on entend la ligne moyenne de la ligne brisée qui est définie d'une part par les lignes de plus grande pente des flancs d'onde plans 9 successifs, d'autre part par les courts segments sensiblement verticaux que le liquide parcourt au passage des arrondis 10.

Compte tenu de la structure ondulée-croisée, le liquide arrivant sur le pack au point A s'étale à l'intérieur d'un cône aplati 16 défini par la ligne 15 et par sa symétrique 17 par rapport à la perpendiculaire 14, qui est verticale. Le demi angle au sommet de ce cône, dans le plan de la bande, est noté $\alpha$. Pour les valeurs particulières $\gamma = 60°$ et $\delta =$

45°, l'angle $\alpha$ est voisin de 30°.

Lorsque la bande 4A est inclinée d'un angle i dans son plan (Figure 8), on constate que l'axe 18 du cône d'étalement du liquide dévie vers la verticale par rapport à la droite 14, mais d'un angle d, appelé angle de déviation liquide, inférieur à l'angle i. De plus, on constate que le demi angle d'ouverture du cône 15 reste sensiblement constant et égal à la valeur $\alpha$ précitée.

Ainsi, dans l'exemple considéré, pour i = 10°, d = 5° environ, et pour i ≤ 10°, d est sensiblement proportionnel à i.

On a constaté que, de façon surprenante, les performances de distillation de la colonne restaient satisfaisantes dans la plage 0 ≤ i ≤ 10° environ lorsque les conditions suivantes sont simultanément remplies :

 (1) 40° ≤ γ ≤ 80°
 (2) 30° ≤ δ ≤ 60°
 (3) d/i < 0,6.

De façon commode, on peut déterminer avec une approximation suffisante des couples de valeurs des angles γ et δ, pour vérifier la relation (3), en utilisant la relation suivante :

$$(4)\ 1 - 2\sin 2\delta \cos^2 \frac{\gamma}{2} \cdot \frac{B - \sin^2 \frac{\gamma}{2}}{2B\sqrt{B - A^2}}\ <\ 0,6,\ \gamma\gamma$$

avec : $A = 1 - \cos^2 \delta . \cos^2 \frac{\gamma}{2}$

et : $B = A\left(1 + \sin^2 \frac{\gamma}{2}\right) - \sin^2 \frac{\gamma}{2}$

On a ainsi pu déterminer les couples de valeurs suivants conduisant à des résultats satisfaisants. Dans le tableau ci-dessous, les valeurs indiquées dans les cases sont celles du rapport d/i calculées à partir de la relation (4) ci-dessus, où la partie gauche de la relation correspond à d/i.

| δ γ | 30° | 40° | 50° | 60° |
|-----|-----|-----|-----|-----|
| 40° | 0,45 | 0,28 | 0,20 | 0,16 |
| 50° | - | 0,41 | 0,30 | 0,24 |
| 60° | - | 0,56 | 0,41 | 0,33 |
| 70° | - | - | 0,52 | 0,42 |
| 80° | - | - | - | 0,52 |

Comme on le comprend, si les performances de distillation des packs 3A, c'est-à-dire leur aptitude à s'opposer à l'effet de paroi en position inclinée suivant la direction F, sont satisfaisantes, il en est de même, a fortiori, de packs dont les bandes ondulées formeraient avec le plan d'oscillation un angle positif mais inférieur à 90°. La colonne 1 peut donc être orientée de toute manière désirée autour de son axe X-X.

Bien entendu, lorsque les relations indiquées plus haut sont vérifiées, les performances de distillation de la colonne sont satisfaisantes que la structure flottante possède ou non une direction d'oscillation préférentielle.

**Revendications**

1.  - Structure maritime flottante telle qu'une barge ou une plate-forme pétrolière en mer, possédant un angle d'oscillation i supérieure à 0° et au plus égal à une valeur prédéterminée $i_o$ qui est inférieure ou égale à 10° et supérieure à 0°, sur la structure flottante (2) étant fixée une colonne de distillation (1) capable de fonctionner dont l'axe (X-X) peut osciller par rapport à la verticale suivant l'angle i et qui est équipée sur au moins une partie de sa longueur d'un garnissage ondulé-croisé (3), ce garnissage comprenant une superposition de tronçons de garnissage (3A, 3B) dont chacun comporte un empilement de bandes ondulées verticales (4A, 4B) ayant leurs ondulations (5) inclinées alternativement en sens opposés, la configuration de l'ondulation des bandes (4A) d'au moins un tronçon de garnissage (3A) étant choisie de manière que, pour chaque paire de bandes adjacentes (4A) de ce tronçon, lorsqu'on incline les bandes dans leur plan général dudit angle i, les lignes de plus grande pente moyennes (15, 17) des flancs d'onde moyens (10) des deux bandes délimitent, à partir de tout point (A) du bord supérieur (12) de la paire de bandes, de part et d'autre de la perpendiculaire (14) à ce bord audit point, un cône aplati (16) dont l'axe (18) forme avec ladite perpendiculaire (14) un angle d tel que le rapport d/i soit inférieur à 0,6 et, de préférence, inférieur à 0,5, avec $40° \leq \gamma \leq 80°$ et $30° \leq \delta \leq 60°$, où $\gamma$ désigne l'angle d'ouverture moyen de l'ondulation et $\delta$ l'inclinaison des génératrices des ondes de chacune des bandes (4A) dudit tronçon (3A), l'angle d'ouverture moyen $\gamma$ de l'ondulation et l'inclinaison $\delta$ des génératrices des ondes de chacune des bandes (4A) dudit tronçon (3A), en vue de face, sont liés par la relation suivante :

$$1 - 2\sin 2\delta \cos^2 \frac{\gamma}{2} \cdot \frac{B - \sin^2 \frac{\gamma}{2}}{2B\sqrt{B - A^2}} \; < \; 0,6, \text{ et de préférence } <0,5,$$

avec : $A = 1 - \cos^2 \delta . \cos^2 \frac{\gamma}{2}$

et : $B = A\left(1 + \sin^2 \frac{\gamma}{2}\right) - \sin^2 \frac{\gamma}{2} \; .$

2. - Structure maritime flottante suivant la revendication 1, **caractérisée en ce que** $\gamma = 40°$ environ et $\delta$ est compris entre 30° environ et 60° environ, de préférence entre 40° environ et 60° environ.

3. - Structure maritime flottante suivant la revendication 1, **caractérisée en ce que** $\gamma = 50°$ environ et $\delta$ est compris entre 40° environ et 60° environ, de préférence entre 50° environ et 60° environ.

4. - Structure maritime flottante suivant la revendication 1, **caractérisée en ce que** $\gamma = 60°$ environ et $\delta$ est compris entre 40° environ et 60° environ, de préférence entre 50° environ et 60° environ.

5. - Structure maritime flottante suivant la revendication 1, **caractérisée en ce que** $\gamma = 70°$ environ et $\delta$ est compris entre 50° environ et 60° environ et de préférence voisin de 60°.

6. - Structure maritime flottante suivant la revendication 1, **caractérisée en ce que** $\gamma = 80°$ environ et $\delta = 60°$ environ.

7. - Structure maritime flottante suivant l'une quelconque des revendications 1 à 6, **caractérisée en ce que** la colonne (1) est une double colonne de distillation d'air.

8. - Procédé d'opération d'une colonne de distillation fixée à une structure maritime flottante telle qu'une barge ou une plate-forme pétrolière en mer, possédant un angle d'oscillation i supérieure à 0° et au plus égal à une valeur prédéterminée $i_o$ qui est inférieure ou égale à 10° et supérieure à 0°, la colonne de distillation (1) dont l'axe (X-X) peut osciller par rapport à la verticale suivant l'angle i et étant équipée sur au moins une partie de sa longueur d'un garnissage ondulé-croisé (3), ce garnissage comprenant une superposition de tronçons de garnissage (3A, 3B) dont chacun comporte un empilement de bandes ondulées verticales (4A, 4B) ayant leurs ondulations (5) inclinées alternativement en sens opposés, la configuration de l'ondulation des bandes (4A) d'au moins un tronçon de garnissage (3A) étant choisie de manière que, pour chaque paire de bandes adjacentes (4A) de ce tronçon, lorsqu'on incline les bandes dans leur plan général dudit angle i, les lignes de plus grande pente moyennes (15, 17) des flancs d'onde moyens (10) des deux bandes délimitent, à partir de tout point (A) du bord supérieur (12) de la paire de bandes, de part et d'autre de la perpendiculaire (14) à ce bord audit point, un cône aplati (16) dont l'axe (18) forme avec ladite perpendiculaire (14) un angle d tel que le rapport d/i soit inférieur à 0,6 et, de préférence, inférieur à 0,5, avec $40° \leq \gamma \leq 80°$ et $30° \leq \delta \leq 60°$, où $\gamma$ désigne l'angle d'ouverture moyen de l'ondulation et $\delta$ l'inclinaison des génératrices des ondes de chacune des bandes (4A) dudit tronçon (3A), l'angle d'ouverture moyen $\gamma$ de l'ondulation

et l'inclinaison δ des génératrices des ondes de chacune des bandes (4A) dudit tronçon (3A), en vue de face, sont liés par la relation suivante :

$$1 - 2\sin 2\delta \cos^2 \frac{\gamma}{2} \cdot \frac{B - \sin^2 \frac{\gamma}{2}}{2B\sqrt{B - A^2}} \; < \; 0,6, \; \text{et de préférence} \; <0,5,$$

avec : $A = 1 - \cos^2 \delta . \cos^2 \frac{\gamma}{2}$

et : $B = A\left(1 + \sin^2 \frac{\gamma}{2}\right) - \sin^2 \frac{\gamma}{2}$ .

9. - Procédé suivant la revendication 8, **caractérisé en ce que** la colonne (1) est une double colonne de distillation d'air.

## Claims

1. Floating offshore structure such as an offshore oil platform or barge, with an angle of oscillation $\underline{i}$ greater than 0° and at most equal to a predetermined value $\underline{i_o}$ which is less than or equal to 10° and greater than 0°, there being fixed to the floating structure (2) an operational distillation column (1) the axis (X-X) of which can oscillate with respect to the vertical by the angle $\underline{i}$ and which is equipped, over at least part of its length, with a cross-corrugated packing (3), this packing comprising a superposition of lengths of packing (3A, 3B), each of which comprises a stack of vertical corrugated strips (4A, 4B) with their corrugations (5) alternately inclined in opposite directions, the configuration of the corrugation of the strips (4A) of at least one length of packing (3A) being chosen to be such that, for each pair of adjacent strips (4A) of this length, when the strips are inclined in their general plane by the said angle $\underline{i}$, the mean lines of greatest slope (15, 17) of the mean corrugation flanks (10) of the two strips delimit, measuring from any point (A) on the upper edge (12) of the pair of strips, on each side of the perpendicular (14) to this edge at the said point, a flattened cone (16), the axis (18) of which forms with the said perpendicular (14) an angle $\underline{d}$ such that the ratio $\underline{d/i}$ is less than 0.6 and preferably less than 0.5, with 40° ≤ γ ≤ 80° and 30° ≤ δ ≤ 60°, where γ denotes the mean angular aperture of the corrugation and δ denotes the inclination of the generatrices of the corrugations of each of the strips (4A) of the said length (3A), the mean angular aperture γ of the corrugation and the inclination δ of the generatrices of the corrugations of each of the strips (4A) of the said length (3A), when viewed face on, are connected by the following relationship:

$$1 - 2\sin 2\delta \cos^2 \frac{\gamma}{2} \cdot \frac{B - \sin^2 \frac{\gamma}{2}}{2B\sqrt{B - A^2}} < 0.6, \; \text{and preferably} \; < 0.5,$$

with: $A = 1 - \cos^2 \delta . \cos^2 \frac{y}{2}$

and: $B = A\left(1 + \sin^2 \frac{\gamma}{2}\right) - \sin^2 \frac{\gamma}{2}$ .

2. Floating offshore structure according to Claim 1, **characterized in that** γ = 40° approximately and δ is between about 30° and about 60°, preferably between about 40° and about 60°.

3. Floating offshore structure according to Claim 1, **characterized in that** γ = 50° approximately and δ is between about 40° and about 60°, preferably between about 50° and about 60°.

4. Floating offshore structure according to Claim 1, **characterized in that** γ = 60° approximately and δ is between about 40° and about 60°, preferably between about 50° and about 60°.

5. Floating offshore structure according to Claim 1, **characterized in that** $\gamma$ = 70° approximately and $\delta$ is between about 50° and about 60° and preferably close to 60°.

6. Floating offshore structure according to Claim 1, **characterized in that** $\gamma$ = 80° approximately and $\delta$ = 60° approximately.

7. Floating offshore structure according to any one of Claims 1 to 6, **characterized in that** the column (1) is a double air distillation column.

8. Method of operating a distillation column fixed to a floating offshore structure such as an offshore oil platform or barge, with an angle of oscillation $\underline{i}$ greater than 0° and at most equal to a predetermined value $\underline{i}_o$ with is less than or equal to 10° and greater than 0°, the distillation column (1) having its axis (X-X) able to oscillate with respect to the vertical by the angle $\underline{i}$ and being equipped, over at least part of its length, with a cross-corrugated packing (3), this packing comprising a superposition of lengths of packing (3A, 3B), each of which comprises a stack of vertical corrugated strips (4A, 4B) with their corrugations (5) alternately inclined in opposite directions, the configuration of the corrugation of the strips (4A) of at least one length of packing (3A) being chosen to be such that, for each pair of adjacent strips (4A) of this length, when the strips are inclined in their general plane by the said angle $\underline{i}$, the mean lines of greatest slope (15, 17) of the mean corrugation flanks (10) of the two strips delimit, measuring from any point (A) on the upper edge (12) of the pair of strips, on each side of the perpendicular (14) to this edge at the said point, a flattened cone (16), the axis (18) of which forms with the said perpendicular (14) an angle $\underline{d}$ such that the ratio $\underline{d/i}$ is less than 0.6 and preferably less than 0.5, with $40° \leq \gamma \leq 80°$ and $30° \leq \delta \leq 60°$, where $\gamma$ denotes the mean angular aperture of the corrugation and $\delta$ denotes the inclination of the generatrices of the corrugations of each of the strips (4A) of the said length (3A), the mean angular aperture $\gamma$ of the corrugation and the inclination $\delta$ of the generatrices of the corrugations of each of the strips (4A) of the said length (3A), when viewed face on, are connected by the following relationship:

$$1-2\sin 2\delta \cos^2 \frac{\gamma}{2}\frac{B-\sin^2 \frac{\gamma}{2}}{2B\sqrt{B-A^2}} < 0.6, \text{ and preferably } < 0.5,$$

with: $A = 1 - \cos^2\delta . \cos^2 \frac{y}{2}$

and: $B = A \left(1 + \sin^2 \frac{\gamma}{2}\right) - \sin^2 \frac{\gamma}{2} .$

9. Method according to Claim 8, **characterized in that** the column (1) is a double air distillation column.

**Patentansprüche**

1. Schwimmende Seestruktur, wie eine Barge oder eine Öl-Meeresplattform, die einen Pendelwinkel $\underline{i}$ aufweist, der größer als 0° und höchstens gleich einem vorbestimmten Wert $\underline{i}_0$ ist, der kleiner oder gleich 10° und größer als 0° ist, wobei auf der schwimmenden Struktur (2) eine Destillationssäule (1) befestigt ist, die in der Lage ist, in Betrieb zu sein, deren Achse (X-X) in Bezug auf die Vertikale gemäß dem Winkel $\underline{i}$ pendeln kann und die auf mindestens einem Teil ihrer Länge mit einem quer gewellten Füllkörper (3) versehen ist, wobei dieser Füllkörper eine Übereinanderschichtung von Füllkörperabschnitten (3A, 3B) umfasst, von denen jeder einen Stapel von vertikalen Wellbändern (4A, 4B) aufweist, die Wellungen (5) aufweisen, die abwechselnd in entgegengesetzte Richtungen geneigt sind, wobei die Ausgestaltung der Wellung der Bänder (4A) von mindestens einem Füllkörperabschnitt (3A) derart ausgewählt ist, dass für jedes Paar von benachbarten Bändern (4A) dieses Abschnitts, wenn die Bänder in ihrer allgemeinen Ebene des Winkels $\underline{i}$ geneigt werden, die mittleren Linien mit der größten Neigung (15, 17) der mittleren Wellenflanken (10) der zwei Bänder, ausgehend von jedem Punkt (A) des oberen Randes (12) des Paars von Bändern, auf jeder Seite der Senkrechten (14) zu diesem Rand an dem Punkt einen abgeflachten Kegel (16) abgrenzen, dessen Achse (18) mit der Senkrechten (14) einen Winkel $\underline{d}$ bildet, derart, dass das Verhältnis $\underline{d/i}$ kleiner als 0,6 und vorzugsweise kleiner als 0,5 ist, wobei $40° \leq \gamma \leq 80°$ und $30° \leq \delta \leq 60°$, wo $\gamma$ den mittleren Öffnungswinkel der Wellung und $\delta$ die Neigung der Mantellinien der Wellen von jedem der Bänder (4A) des Abschnitts (3A) bezeichnen, wobei der mittlere Öffnungswinkel $\gamma$ der Wellung und die Neigung $\delta$ der Mantellinien der Wellen von jedem der Bänder (4A) des Abschnitts (3A), aus der Vorderansicht, durch das folgende Verhältnis verbunden sind:

$$1-2\sin2\delta\cos^2\frac{\gamma}{2}\cdot\frac{B-\sin^2\frac{\gamma}{2}}{2B\sqrt{B-A^2}} \quad < \quad 0,6 \quad \text{und vorzugsweise} \quad <$$

$$0,5,$$

mit: $A = 1 - \cos^2\delta\cdot\cos^2\frac{\gamma}{2}$

und: $B = A\left(1+\sin^2\frac{\gamma}{2}\right)-\sin^2\frac{\gamma}{2}.$

**2.** Schwimmende Seestruktur nach Anspruch 1, **dadurch gekennzeichnet, dass** $\gamma$ = ungefähr 40° und $\delta$ zwischen ungefähr 30° und ungefähr 60°, vorzugsweise zwischen ungefähr 40° und ungefähr 60°, enthalten ist.

**3.** Schwimmende Seestruktur nach Anspruch 1, **dadurch gekennzeichnet, dass** $\gamma$ = ungefähr 50° und $\delta$ zwischen ungefähr 40° und ungefähr 60°, vorzugsweise zwischen ungefähr 50° und ungefähr 60°, enthalten ist.

**4.** Schwimmende Seestruktur nach Anspruch 1, **dadurch gekennzeichnet, dass** $\gamma$ = ungefähr 60° und $\delta$ zwischen ungefähr 40° und ungefähr 60°, vorzugsweise zwischen ungefähr 50° und ungefähr 60°, enthalten ist.

**5.** Schwimmende Seestruktur nach Anspruch 1, **dadurch gekennzeichnet, dass** $\gamma$ = ungefähr 70° und $\delta$ zwischen ungefähr 50° und ungefähr 60°, vorzugsweise nahe 60°, enthalten ist.

**6.** Schwimmende Seestruktur nach Anspruch 1, **dadurch gekennzeichnet, dass** $\gamma$ = ungefähr 80° und $\delta$ = ungefähr 60°.

**7.** Schwimmende Seestruktur nach einem der Ansprüche 1 bis 6, **dadurch gekennzeichnet, dass** die Säule (1) eine Luftdestillations-Doppelsäule ist.

**8.** Verfahren zum Betrieb einer Destillationssäule, die an einer schwimmenden Seestruktur, wie einer Barge oder einer Öl-Meeresplattform, befestigt ist, die einen Pendelwinkel $\underline{i}$ aufweist, der größer als 0° und höchstens gleich einem vorbestimmten Wert $\underline{i_0}$ ist, der kleiner oder gleich 10° und größer als 0° ist, wobei die Destillationssäule (1), deren Achse (X-X) in Bezug auf die Vertikale gemäß dem Winkel $\underline{i}$ pendeln kann und die auf mindestens einem Teil ihrer Länge mit einem quer gewellten Füllkörper (3) versehen ist, wobei dieser Füllkörper eine Übereinanderschichtung von Füllkörperabschnitten (3A, 3B) umfasst, von denen jeder einen Stapel von vertikalen Wellbändern (4A, 4B) aufweist, die Wellungen (5) aufweisen, die abwechselnd in entgegengesetzte Richtungen geneigt sind, wobei die Ausgestaltung der Wellung der Bänder (4A) von mindestens einem Füllkörperabschnitt (3A) derart ausgewählt ist, dass für jedes Paar von benachbarten Bändern (4A) dieses Abschnitts, wenn die Bänder in ihrer allgemeinen Ebene des Winkels $\underline{i}$ geneigt werden, die mittleren Linien mit der größten Neigung (15, 17) der mittleren Wellenflanken (10) der zwei Bänder, ausgehend von jedem Punkt (A) des oberen Randes (12) des Paars von Bändern, auf jeder Seite der Senkrechten (14) zu diesem Rand an dem Punkt einen abgeflachten Kegel (16) abgrenzen, dessen Achse (18) mit der Senkrechten (14) einen Winkel $\underline{d}$ bildet, derart, dass das Verhältnis $\underline{d/i}$ kleiner als 0,6 und vorzugsweise kleiner als 0,5 ist, wobei $40°\leq \gamma \leq 80°$ und $30° \leq \delta \leq 60°$, wo $\gamma$ den mittleren Öffnungswinkel der Wellung und $\delta$ die Neigung der Mantellinien der Wellen von jedem der Bänder (4A) des Abschnitts (3A) bezeichnen, wobei der mittlere Öffnungswinkel $\gamma$ der Wellung und die Neigung $\delta$ der Mantellinien der Wellen von jedem der Bänder (4A) des Abschnitts (3A), aus der Vorderansicht, durch das folgende Verhältnis verbunden sind:

$$1-2\sin 2\delta \cos^2 \frac{\gamma}{2} \cdot \frac{B-\sin^2 \frac{\gamma}{2}}{2B\sqrt{B-A^2}} \; < \; 0,6 \; \text{ und vorzugsweise } \; <$$

0,5,

mit: $A = 1 - \cos^2 \delta \cdot \cos^2 \dfrac{\gamma}{2}$

und: $B = A\left(1 + \sin^2 \dfrac{\gamma}{2}\right) - \sin^2 \dfrac{\gamma}{2}.$

**9.** Verfahren nach Anspruch 8, **dadurch gekennzeichnet, dass** die Säule (1) eine Luftdestillations-Doppelsäule ist.

FIG.1

FIG.2

FIG.3

FIG.4

10

FIG.5

FIG.6

FIG.7

FIG.8

**EP 1 073 515 B1**

**Documents brevets cités dans la description**

- GB 1004046 A
- CA 1095827 A
- WO 9010497 A